Europäisches Patentamt

European Patent Office

Office européen des brevets

(11) Publication number: **0 281 701**
**A2**

## (12) EUROPEAN PATENT APPLICATION

(21) Application number: 87305666.7

(22) Date of filing: 25.06.87

(51) Int. Cl.⁴: **B29C 49/24** , G09F 3/04

(30) Priority: 11.03.87 US 24541

(43) Date of publication of application:
14.09.88 Bulletin 88/37

(84) Designated Contracting States:
AT BE CH DE ES FR GB GR IT LI LU NL SE

(71) Applicant: **MULTI-COLOR CORPORATION**
**4575 Eastern Avenue**
**Cincinnati Ohio 45226(US)**

(72) Inventor: **Court, John C.**
**2205 Park Avenue**
**Cincinnati Ohio 45206(US)**
Inventor: **Zeiter, Theodore R.**
**3740 Fallen Tree Way**
**Amelia Ohio 45102(US)**

(74) Representative: **Carpmael, John William**
**Maurice et al**
**CARPMAELS & RANSFORD 43 Bloomsbury**
**Square**
**London, WC1A 2RA(GB)**

(54) Synthetic in-mold label.

(57) An in-mold label for use with a blow molded high density polyethylene container or the like formed from a thin sheet of multicellular thermoplastic film composed of a biaxially extruded polyethylene/polystyrene copolymer. The in-mold label resists curling, wrinkling and crazing, has thermodynamic properties similar to those of the polyethylene container, and may be recycled along with the container.

EP 0 281 701 A2

## SYNTHETIC IN-MOLD LABEL

## BACKGROUND OF THE INVENTION

### 1. Field of the Invention

The present invention relates generally to labels, and in particular is concerned with a label made from a synthetic thermoplastic film for use with high density polyethylene (HDPE) plastic containers formed by an in-mold labeling (IML) apparatus and process.

### 2. Description of the Related Art

Plastic containers or bottles are prevalent today in a wide variety of shapes and sizes for holding many different kinds of materials such as light duty liquids (e.g., dishwashing detergent), heavy duty liquids (e.g., laundry detergents), motor oil, vegetable oil, herbicides, etc. Generally, these containers are fabricated from plastic, particularly high-density polyethylene (HDPE) by means of blow molding or injection molding.

Generally, HDPE containers are provided with a label which designates the trade name of the product and may contain other information as well. In some instances, the label is merely attached to the container after molding by means of adhesive or the like. However, the label may also be attached to the container during the container molding process. This technology by which the label is associated with the container during the molding operation is generally referred to as an in-mold label (IML) process.

In-mold labeling is well known in the art. Generally, an in-mold label is placed in a blow or injection mold machine prior to the formation of a container. Once the label is in position, the container is formed by blowing or injecting plastic in the mold. The label, which can include an adhesive, attaches or adheres to the outer surface of the container. In some instances, the label is partially or completely embedded in the plastic surface of the HDPE container.

Although for purposes of exemplary showing, the present invention is described and illustrated in connection with a HDPE container, it will be understood that in-mold labeling may also be applied in the formation of propylene multi-layer bottles and other types of plastic containers formed by blow molding, injection molding, or other molding processes.

Many devices are known for performing in-mold labeling on a container. For example, U.S. Patent 3,759,643 issued to Langecker in 1973 shows an apparatus for applying labels onto hollow bodies. The apparatus includes a blow mold having a cavity for containing a hollow body, and a member which is movable toward the cavity. The member includes a section for carrying a label to be applied to the hollow body during movement of the member toward the cavity. Ventilation openings are provided in the mold for venting any air between the hollow body and label.

Another in-mold labeler is disclosed in U.S. Patent 4,479,644 issued to Bartimes et al. in 1984. The devices includes a label applicator for applying labels to mold cavities of rotating mold units. The applicator includes an extensible fluid motor which carries a suction head and oscillates between a label pick-up position and a label deposit position. A sensor provides the timing between the applicator with the position of a mold cavity into which a label is to be placed.

Other in-mold labelers and methods include the following U.S. Patents: 3,108,850; 3,227,787; 3,267,186; 3,272,681; 3,287,198; 3,292,209; 3,324,508; 3,657,405; 3,759,645; 3,801,689; 4,359,314; 4,397,625; 4,549,863 and 4,605,462.

Although in-mold labeling has been used for many years for a wide variety of product containers, there has been little advance in the technology of the labels themselves, and several significant problems have continued to plague this industry. For example, conventional in-mold labeling processes generally utilize a paper-based label with or without an appropriate adhesive. It has been found that such conventional paper labels can wrinkle, curl or craze when exposed to the heat and moisture associated with container formation. This results in a label which may not be completely adhered to the outer surface of the container. Furthermore, the wrinkling, curling or crazing of the label provides an unsightly aesthetic appearance and detracts from the marketing appeal of the container. In addition, it is also found that paper labels associated with certain types of containers (e.g., shampoo) which are exposed to very humid environments (e.g., a shower) may eventually disintegrate and become separated from the container. Moreover, certain types of paper labels are not resistant to scuffing or abrasion, which can cause portions of the label to wear off during shipping, detracting from the aesthetic appearance of the container and label.

Another problem which sometimes arises during container formation is caused by the difference in thermodynamic properties between the HDPE plastic container and the paper label. During the relatively high temperatures associated with the molding process, this difference in thermodynamic properties creates stresses in the container's surface which can result in an unwanted bulge or depression in the container in the area underlying the label. Such a bulge or depression causes variation in the volume of the container, which can lead to overfills and underfills.

Finally, occasionally a defective container will be produced during the molding process. In order to reclaim valuable raw materials, it is often desirable to recycle the defective container. Removal of an in-mold label from such a defective container can be time consuming and costly. For example, one method of recycling defective containers involves grinding the container to a relatively coarse powder along with the label. Thereafter, the paper label material must be separated in some manner from the plastic material.

For example, U. S. Patent 4,379,525 issued to Nowicki in 1983 describes a process where the paper is ground along with the container and thereafter the paper label residue is separated. This patent teaches that the label may be made from paper or metal foil, and may include a wax containing adhesive.

Likewise, U. S. Patent 4,599,131 issued to Matuszak in 1986 shows machinery for delabeling plastic containers involving removing labels applied during the in-mold process. Although such methodologies have been devised, they require additional equipment and time, thereby increasing the cost of producing HDPE and other blow molded containers.

Although these problems have existed for a long time, IML technology has not concentrated on the label itself as a potential cure, but has tended to utilize conventionally available IML labels.

For example, U.S. Patent 4,595,449 issued to Nowicki in 1986 describes a label preferably made of an extensible paper such as porous craft paper coated with an adhesive such as gel lacquer which becomes soft and tacky at 170°-180°.

U.S. Patent 4,418,033 issued to Hatakeyama in 1983 describes a transfer foil formed by laminating a base film, a mold lubricant layer, a printing layer and an adhesive layer.

U.S. Patent 3,608,020 issued to Langecker in 1971 discloses a thin foil made from a weldable or glueable raw material, particularly a transparent label which is roughened. The patent is concerned with a bubble-free application of a label.

U.S. Patent 3,324,508 issued to Dickinson in 1967 describes a label which is secured by means of a static charge. The label itself is in the form of a thin, flexible, extensible film capable of retaining a static charge and being fused to the plastic of the container. Specific materials mentioned are homopolymers or copolymers of olefinically unsaturated hydrocarbons, i.e., ethylene, propylene, styrene, as well as cellulosic polymers. Low density polyethylene film is also mentioned.

U.S. Patent 3,292,209 issued to Borkmann in 1966 describes a label made of an olefin polymer or copolymer characterized by a low softening point.

U.S. Patent 3,227,787 issued to Battenfeld in 1966 describes a label made of plastic or paper which has a layer of weldable plastic material or glueable material corresponding to the material to which the label is to be attached.

U.S. Patent 3,550,197 issued to Szajna et al. in 1970 teaches the use of an adhesive having the ability to withstand the heat during the molding process, but being readily removable by a solvent. The adhesive used with an insert made of Mylar in a mold half.

U.S. Patent 3,151,193 issued to Thornton in 1964 teaches the use of a printed polyethylene film for use as labels in an in-mold labeler.

U.S. Patent 3,108,850 issued to Brandt in 1963 teaches the use of an ordinary polyolefin sheet which can be adhered to the container. One label is made from branched polyethylene pretreated with flame treating or corona discharge treating. The label may also be provided with a contiguous plastic material such as a self-sustaining film.

U.S. Patent 4,323,411 issued to Uhlig in 1982 discloses a label in the form of a laminated foil wherein the printing is sandwiched between two layers of the same thermoplastic material from which the container is formed.

U.S. Patent 4,289,817 issued to Valyi in 1981 describes a liner for use in blow molding which may be made of a single plastic or several different plastics. Typical liner materials include the acetal polymers, polyolefins, ionomer resins, polyallomer copolymers, polystyrene, polyvinylidene chloride, polyvinyl chloride, polycarbonates and acrylonitrile.

U.S. Patent 4,262,058 issued to Saunders in 1981 shows a curl resistant paper label with increased water holdout which may be usable in a blow molding process. The label uses a typical metallic-paper laminate, a metalized paper or a varnished paper as the base stock togeterh with a specified coating material.

Although the foregoing developments are generally well-known, none of them adequately solves the aforementioned problems to provide an in-mold label which can be constructed from an economical and commercially available material capable of withstanding the stresses involved with container molding, resisting curling, wrinkling and crazing, exhibiting compatability with the thermodynamic and chemical properties of the container, and providing a high quality abrasion and scuff resistant printing surface.

## SUMMARY OF THE INVENTION

The present invention provides an improved IML construction which eliminates the deficiencies of known in-mold labels used with HDPE containers and the like formed by an in-mold label apparatus and process. The label is constructed from a material which is capable of withstanding the stresses of container formation and which can be recycled with a container. The label has printing quality equal to current paper labels and can be utilized in existing in-mold labeling equipment.

In a preferred embodiment, the present invention includes a label having a backing constructed from a synthetic thermoplastic film having thermodynamic characteristics substantially similar to the plastic container with which the label is to be used. A heat activated adhesive is applied to a surface of the backing which will come into contact with the container. Selected inkwork is printed on the opposite surface of the backing. The label is positioned in a blow or injection mold prior to container formation. As the container is formed, the adhesive is activated and adheres the label to an outer surface of the bottle.

The preferred embodiment of the IML label of the present invention is fabricated from a biaxially extruded polyethylene/polystyrene copolymer single ply film which may be provided with a printing enhancing coating. The film is provided in sheets which may be die cut and printed with appropriate label indicia. Most importantly, labels constructed from the polyethylene/polystyrene film of the present invention can be printed on convention IML labeling equipment and furthermore can be applied to HDPE containers using conventional IML molding equipment. The plastic composition of the improved labels permits them to withstand the stresses involved with container molding, and furthermore resist curling, wrinkling and crazing, particularly in humid environments. Moreover, the composition of the improved IML labels is completely compatable with the thermodynamic and chemical properties of the container, thereby eliminating bulging or warping of the container and facilitating recycling of container raw materials.

Further features of the invention will become apparent from the detailed description which follows.

## DETAILED DESCRIPTION OF THE PREFERRED EMBODIMENT

The preferred construction of the improved IML labels of the present invention uses a multicellular thermoplastic film comprised of a polyethylene/polystyrene copolymer in a biaxially extruded single ply. Examples of such films are described in U. S. Patent No. 4,191,719 issued March 4, 1980 to J. Jack et al for "Process For Producing Multicellular Articles From A Blend Of A Crystalline Polyolefin And A Metal Resinate", the disclosure of which is incorporated herein by reference. These films are marketed under the name POLYART 2 by BXL Plastics, Ltd. and Arjobex. In order to enhance the printing qualities of the thermoplastic film, it may be provided with a calcium carbonate and/or china clay coating. Such a thermoplastic film having a printing enhancing acrylic bound china clay calcium carbonate pigmented coating is marketed under the name POLYART 2 Plus Rigid by BXL Plastics, Ltd. and Arjobex, and may also be utilized in fabricating the improved IML label of the present invention. The coating insures that the surface of the film will accept high quality printing which will not smear or rub off. The coating may also improve the abrasion and scuff resistant qualities of the finished IML label.

The physical properties of the aforementioned thermoplastic film are as follows:

## TABLE I

| | |
|---|---|
| Density: | $0.77 \text{g/cm}^3$ |
| Tensile Strength: | $36{,}000 \text{ kN/m}^2$ |
| Elongation at Break: | 80% |
| Initial Tearing Resistance: | 50Nmm |
| Scant Modulus: | $1 \times 10^6 \text{kn/m}^2$ |
| Folding Endurance: | $10^5$ |

The aforementioned film is printed with suitable label indicia in a conventional manner. It has been found that the printing quality of the present thermoplastic film IML label is equivalent to the printing quality of conventional paper labels. If the label is to be utilized as a peel-off label, selected labeling indicia may also be provided on the inner surface of the backing. In either event, a heat activated or other adhesive may also be applied to the label sheet. Thereafter, the individual labels may be die cut in the conventional manner.

The IML labels of the present invention may be utilized in conventional in-mold labeling apparatus in the same manner as conventional paper labels. The plastic nature of the labels eliminates wrinkling and crazing when exposed to the heat and moisture experienced during container formation. Furthermore, inasmuch as the thermoplastic film has substantially similar heating and cooling characteristics to the associated HDPE plastic containers, distortion, buckling and bulging of the container wall is avoided.

It has been found that the IML label in the present invention also has a higher moisture and solvent resistance than conventional paper labels. Such resistance reduces label edge lift and increases aesthetic shelf life of the label, particularly when applied to a plastic container. Moreover, the thermo plastic film IML label has increased tear and bursting strengths over conventional papers, which permits the use of a thinner label than is possible with comparable paper labels.

Although the present invention has been described with reference to preferred embodiments, workers skilled in the art will recognize that changes may be made in form and detail without departing from the spirit and scope of the invention.

## Claims

1. A method of producing an in-mold labeled plastic container comprising:
supplying a sheet of multicellular thermoplastic film composed of a biaxially extruded polyethylene/polystyrene copolymer, said sheet being resistant to wrinkling, curling and crazing and having a surface configured to accept high quality printing;
printing indicia on at least one surface of said sheet;
cutting said sheet into a plurality of individual labels, each label bearing printed indicia;
positioning one of said labels in a mold;
blow molding a HDPE container within said mold such that said label adheres to the outer surface of the blow molded container; and
removing said container from the mold.

2. The method according to claim 1 including the step of providing said film with an acrylic bound china clay calcium carbonate pigmented coating for improving the printing characteristics of the sheet.

3. The method according to claim 2 including the step of applying a heat activated adhesive to one surface of the sheet to improve the adherence of the label to the container.

4. In a high density polyethylene container of the type produced by blow molding, the improvement in combination therewith comprising a multicellular thermoplastic film in-mold label adhered to the outer surface of said container.

5. The container according to claim 4 wherein said thermoplastic film comprises a thin biaxially extruded polyethylene/polystyrene copolymer sheet.

6. The container according to claim 5 wherein said sheet includes an acrylic bound china clay calcium carbonate pigmented coating for improving the printing characteristics of the label.

7. The container according to claim 5 wherein said film has a density of about 0.77g/cm² and a tensile strength of about 36,000 kN/m².

8. The container according to claim 6 including a heat activated adhesive applied to the label for adhering the label to the container.

6